# EUROPEAN PATENT SPECIFICATION

(11) **EP 1 937 934 B1**
(45) Date of publication and mention of the grant of the patent: **12.07.2017**
(21) Application number: 06794991.7
(22) Date of filing: 17.10.2006
(51) Int. Cl.: E21B 21/06

(54) **APPARATUS AND METHOD FOR CONTROLLING THE VISCOSITY OF A DRILLING FLUID**
VORRICHTUNG UND VERFAHREN ZUR STEUERUNG DER VISKOSITÄT EINER BOHRFLÜSSIGKEIT
DISPOSITIF ET PROCEDE DE CONTROLE DE LA VISCOSITE D'UN FLUIDE DE FORAGE

(30) Priority: 18.10.2005 US 253062; 24.01.2006 US 338433
(43) Date of publication of application: 02.07.2008
(73) Proprietor: National Oilwell Varco, L.P., Houston, TX 77036 (US)
(72) Inventor: KOCH, Richard James, Magnolia, Texas 77354 (US); SCOTT, Eric, Conroe, Texas 77302 (US); STONE, Lyndon Ray, Humble, Texas 77346 (US)
(74) Representative: Lucas, Brian Ronald
(86) International application number: PCT/GB2006/050334
(87) International publication number: WO 2007/045925

(56) References cited:
- EP-A1- 1 044 723
- EP-A2- 0 936 344
- WO-A-89/09091
- US-A- 2 219 312
- US-A- 2 941 783
- US-A- 2 954 871
- US-A- 5 857 955
- US-A- 6 073 709
- US-A1- 2002 074 269
- US-A1- 2004 112 816

## Description

The present invention relates to a method of controlling the viscosity of a drilling fluid, to an apparatus for performing the same, to a control apparatus and to a kit for performing the method.

During the construction of a wellbore for the extraction of oil and/or gas, drilling fluid (or "mud") is used to control subsurface pressures, lubricate the drill bit, stabilize the wellbore, and to carry the drill cuttings to the surface amongst other functions. Mud is pumped from the surface through the hollow drill string, exits through nozzles in the drill bit, and returns to the surface through the annular space between the drill string and the walls of the hole.

As the drill bit grinds rocks into drill cuttings, these cuttings become entrained in the mud flow and are carried to the surface. In order to re-use the mud once it returns to the surface and to make the solids easier to handle, the solids must be separated from the mud. To do this the mud is sent through a solids separation system. The first step in separating the cuttings from the mud involves passing the mixture of mud and cuttings over vibrating screens known as shale shakers. The drill cuttings remain on top of the shale shaker screens; the vibratory action of the shakers moves the cuttings down the screen and off the end of the shakers to a point where they can be collected and stored in a tank or mud pit for further treatment or management. The liquid mud passes through the screens and is re-circulated back to mud tanks from which mud is withdrawn for pumping downhole. The function of the mud tanks is to provide a ready supply of cleaned mud for the circulation system.

Additional mechanical processing is often used following treatment by shale shakers to further remove as many fine solids as possible since these particles tend to affect the properties of the mud and drilling performance if returned to the circulation system. This mechanical equipment is usually one of more of three types: 1) hydrocyclone-type desilters and desanders; 2) mud cleaners (hydrocyclone discharging on a fine screened shaker), and 3) rotary bowl decanting centrifuges. The separated fine solids are combined with the larger drill cuttings removed by the shale shakers.

Decanting centrifuges can be used to process drilling fluids to separate undesired drilling solids from liquid mud, particularly solids of a size that cannot be removed by shale shakers for example. When such a centrifuge is used to process drilling material (drilling fluid with drilled cuttings therein), changing mud flow conditions often require manual adjustment of centrifuge pump speeds to optimize centrifuge treating performance. Centrifuge operation can be a compromise between performance and intervals between maintenance and repair operations.

Despite this processing by the solids separation system the mud waiting in the mud tanks to be re-used may not have the desired physical properties.

In particular drilling fluid contains various materials and weighing agents, including particularly substantial quantities of clays and other colloidal materials which assist in imparting the required viscosity and gel strength to the mud as required for the entrainment and suspension of the drill cuttings. Whereas the specific gravity or density of the mud can be readily increased by the addition of weighing materials, the drilling mud must have suitable viscosity to perform the aforementioned functions.

The rheological, or flow properties, of a mud invariably change during use, especially viscosity and gel strength. This is due to the nature of the clays, e.g., bentonite, which are readily hydrated during use and which, when hydrated up to the point of maximum hydration of the clay constituents, increase the viscosity and gel strength of the mud. Generally, the clay constituent, or constituents, of a mud gradually absorb or adsorb water and the viscosity and gel strength of the mud is increased. The acceptable range of viscosity and gel strength which a mud can possess, however, is limited, and it cannot be permitted to become too thin or too thick. When a mud becomes too thick, it must be thinned and brought back into an acceptable range of viscosity and gel strength.

In some instances, a centrifuge is used in an effort to control the plastic viscosity of mud. A desired plastic viscosity is a function of the type of mud (water, oil, synthetic-based), the mud density, and other variables. When mud viscosity is too high, the operator will switch on the centrifuge or run it faster. When mud viscosity is too low, the operator will switch off the centrifuge or run it slower. Periodically mud properties are measured manually and corrective action taken by the operator. This can result in a saw-tooth effect on the viscosity of mud re-entering the circulation system which is undesirable.

US 2004/112816 discloses a transportable drilling fluid cleaning system for removing solids from drilling fluid at a drill site that comprises a platform for transporting the cleaning system to a drill site. A bin region on the platform retains solids from the drilling fluid. A settling tank on the platform has an inlet chamber to receive drilling fluid and at least one other chamber. The settling tank acts to separate the drilling fluids into an upper fluid fraction having a reduced concentration of solids and a lower solids fraction having a higher concentration of solids as the drilling fluid flows from the inlet chamber to at least one other chamber. There is a stand on the platform to support at least one centrifuge for separating the solids from the drilling fluid. By using this cleaning system the viscosity of the drilling fluid can be adjusted depending on the stage to which the well bore is drilled. Undesired solids can be removed from the drilling mud which can be recycled to a tank at a desired viscosity. US 6 073 709 discloses a skid mounted first and second stage centrifuges, each being provided with an input pump. Drilling mud is delivered to the first pump, the first stage and then into a tank for storing temporarily the liquids separated from the mud. The heavier weight components are segregated, stored and later added back to the liquid discharge of the second stage to provide an output stream of drilling mud having a specified weight for use in drilling. The lighter weight components are removed at the second stage and are discarded to clean the mud. A control system provides for operation and control without overloading.

According to the present invention there is provided a method for controlling viscosity of drilling fluid as set out in claim 1. In one embodiment, desirable larger solids are introduced back into the container (e.g. barite solids with a largest dimension of greater than about ten microns, and/or drilling solids with a largest dimension greater than about twenty microns). In another embodiment drilling fluid may be returned to the container. Which material and how much is returned to the container may be selected automatically by computer control apparatus. The centrifuge may be a decanting type centrifuge which may be controlled by changing speed of rotation and/or feed rate of drilling fluid in order to adjust the viscosity of drilling fluid in the container. In certain aspects, the centrifuge may be controlled to run at a high speed (e.g. greater than about 2200RPM) so that fluid may be returned to the container. In other aspects the centrifuge may be run at a low speed (e.g. less than about 2200RPM) so that solids may be returned to the container.

The centrifuge may either be part of the existing solids separation system, or it may be a stand alone apparatus (e.g. centrifuge) dedicated to receiving drilling fluid from one or more mud tanks and processing it as described above.

Further steps are set out in claims to 2 to 10 to which attention is hereby directed.

According to yet another aspect of the present invention there is provided an apparatus for controlling viscosity of drilling fluid as set out in claim 11. The control apparatus may be in the form of a computer storing computer executable instructions for operating the aforementioned process.

Further features are set out in claims 12 to 14 to which attention is hereby directed.

According to another aspect of the present invention there is provided a control apparatus for performing the method steps of any of claims 1 to 10 when used in an apparatus as claimed in any of claims 11 to 14.

According to another aspect of the present invention there is provided a kit for controlling viscosity as set out in claim 16.

In certain aspects a centrifuge of this disclosure may be run at a G-force of about 700 G's or greater, e.g. up to 1000 G's, for controlling density; and at less than 700 G's for controlling viscosity.

In certain embodiments of this disclosure, there is a centrifuge system that automatically controls drilling mud viscosity in a drilling system. Sensors measure mud viscosity and mud density. The mud density is used to determine an optimal viscosity. The optimal viscosity is used then as a set point for a control system. A value of measured viscosity is compared to the desired set point value. Based on this comparison, action is taken to increase or decrease mud viscosity, resulting in the maintenance of optimum and consistent mud properties. In certain aspects, the need for operator intervention is reduced or eliminated.

For a better understanding of the present invention reference will now be made, by way of example only, to the accompanying drawings in which:
Fig. 1 is a schematic block diagram of an apparatus for controlling a centrifuge system according to the present invention;
Fig. 2 is a schematic block diagram of a first embodiment of a method according to the present invention;
Fig. 3 is a schematic block diagram of a second embodiment of a method according to the present invention;
Fig. 4 is a cross section through a prior art centrifuge; and
Fig. 5 is a third embodiment of a method according to the present invention.

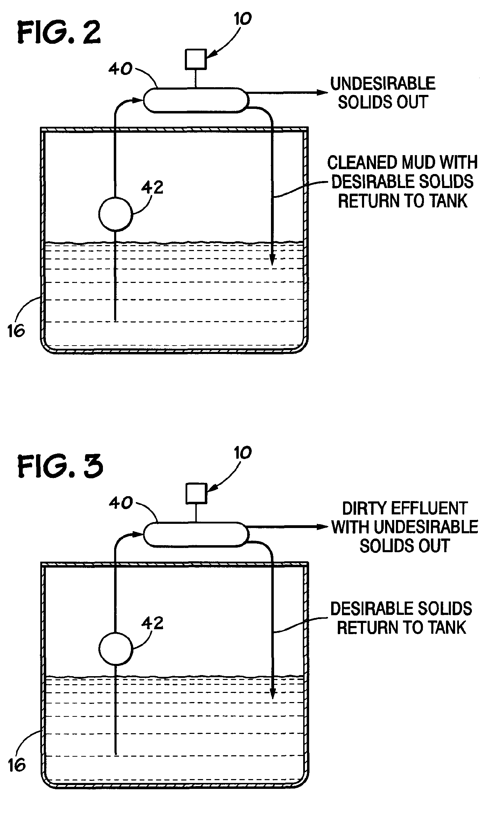

Referring to Fig. 4 a prior art centrifuge system S comprises a bowl 112 supported for rotation about its longitudinal axis, has two open ends 112a and 112b, with the open end 112a receiving a drive flange 114 which is connected to a drive shaft for rotating the bowl. The drive flange 114 has a longitudinal passage which receives a feed tube 116 for introducing a feed slurry, e.g. drilling material such as drilling fluid returned from a wellbore, into the interior of the bowl 112. A screw conveyor 118 extends within the bowl 112 in a coaxial relationship thereto and is supported for rotation within the bowl. A hollow flanged shaft 119 is disposed in the end 112b of the bowl and receives a drive shaft 120 of an external planetary gear box for rotating the screw conveyor 118 in the same direction as the bowl at a selected speed. The wall of the screw conveyor 118 has one or more openings 118a near the outlet end of the tube 116 so that the centrifugal forces generated by the rotating bowl 112 move the slurry radially outwardly and pass through the openings 118a and into the annular space between the conveyor 118 and the bowl 112. The liquid portion of the slurry is displaced to the end 112b of the bowl 112 while entrained solid particles in the slurry settle towards the inner surface of the bowl 112 due to the G' forces generated, and are scraped and displaced by the screw conveyor 118 back towards the end 112a of the bowl for discharge through a plurality of discharge ports 112c formed through the wall of the bowl 112 near its end 112a.

Weirs 119a (two of which are shown) are provided through the flanged portion of the shaft 19 for discharging the separated liquid.

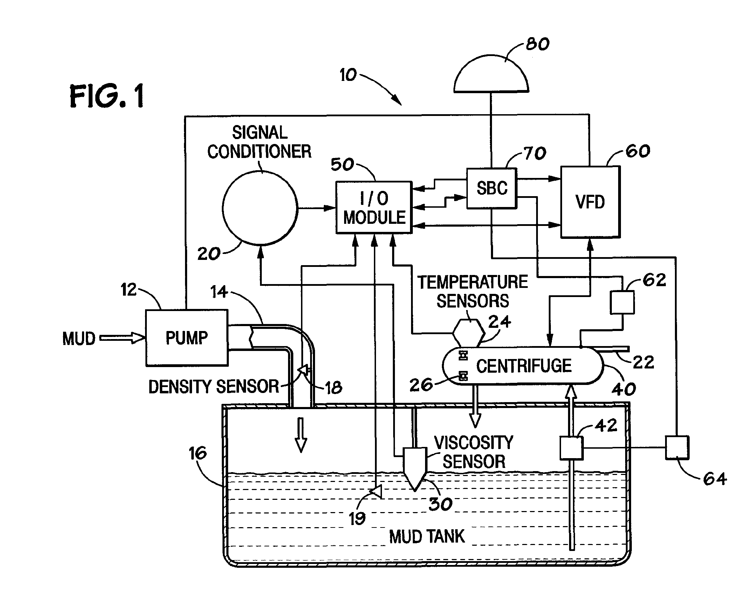

Referring to Fig. 1 a control system 10 according to the present invention comprises a pump 12 that pumps drilling mud through a pipe 14 into a mud tank 16. The drilling mud has already been processed by solids control equipment (not shown) such as shale shakers, hydrocyclones and/or centrifuges prior to arrival at the mud tank 16 through the pipe 14. The mud tank has an outlet (not shown) through which drilling fluid can be drawn to be used again. As such the mud tank 16 provides a storage container for recycled drilling mud before it is used again. As desired, one or more agitators may be used in the mud tank 16.

The mud tank 16 comprises a viscosity sensor 30 for sensing the viscosity of the mud in the tank 16; a density sensor 18 for sensing the density of the mud in the pipe 14; and, optionally, a density sensor 19 for sensing the density of mud in the tank 16. The density sensor 19 can be outside the pipe 14 (e.g. at another location in the drilling fluid circulation system) or in the mud in the tank 16. A solids separation apparatus which in this embodiment is centrifuge 40 (which can be any suitable known centrifuge with a rotatable bowl and a rotatable screw conveyor, including, e.g., a centrifuge as in Fig. 4) is provided for receiving mud pumped by a pump 42 from the mud tank 16 and processes it to remove selected solids, thereby controlling and/or changing the viscosity of the mud leaving the centrifuge 40. Selected solids are discharged from the centrifuge in a line 22 and the processed mud, with desirable solids therein, is reintroduced into the mud tank 16. The pump 42 may run continuously.

A control apparatus in the form of a computer system ("SBC") 70 comprises a microprocessor having access to a memory that store the necessary instructions for controlling the methods described herein. The computer system 70 controls an I/O module 50 and variable frequency drives ("VFD") 60, 62, 64. VFD 60 controls bowl speed of the centrifuge 40. VFD 62 controls the screw conveyor of the centrifuge 40. VFD 64 controls a feed pump 42 that pumps drilling fluid or mud to the centrifuge 40. The system 70 computes a desired pump speed (pumping rate). A signal conditioner 20 controls the viscosity sensor 30 and provides power to it. Temperature sensors 24 monitor the temperature of bearings 26 of a centrifuge drive system and send signals indicative of measured temperatures to the Input/Output module 50. The functions of the I/O module 50 include sending data from the sensors to the system 70 and sending outputs from the system 70 to the VFD 60. In use the signal conditioner 20 processes signals received from the viscosity sensor 30 to estimate an actual viscosity of the mud in the tank 16 and sends signals to the I/O module 50 indicative of actual viscosity values measured by the viscosity sensor 30. The density sensor(s) sends signals indicative of measured mud densities to the I/O module. The I/O module provides viscosity measurements and density measurements to the computer system, which may be done substantially continuously or at predetermined time intervals. The I/O module provides command signals from the system 70 to a variable frequency drive ("VFD") 60.

Continuous density measurements made by the density sensor(s) are used by the computer system 70 to determine a desired value for a mud viscosity set point (e.g. using known equations or a look-up table). The computer system 70 compares actual viscosity measurements from the viscosity sensor 30 (processed by the signal conditioner 20) to the determined desired value and then the computer system 70 calculates the difference between the predetermined set point and a current actual viscosity value. Following this calculation, the computer system 70 changes the operational parameters of the VFDs to run a bowl and/or conveyor of the centrifuge 40 faster or slower or to control pump speed. The computer system 70, which can run periodically or continuously, provides output(s) to a display device 80 (e.g. a monitor, screen, panel, laptop, handheld or desktop computer, etc.), remote and/or on site.

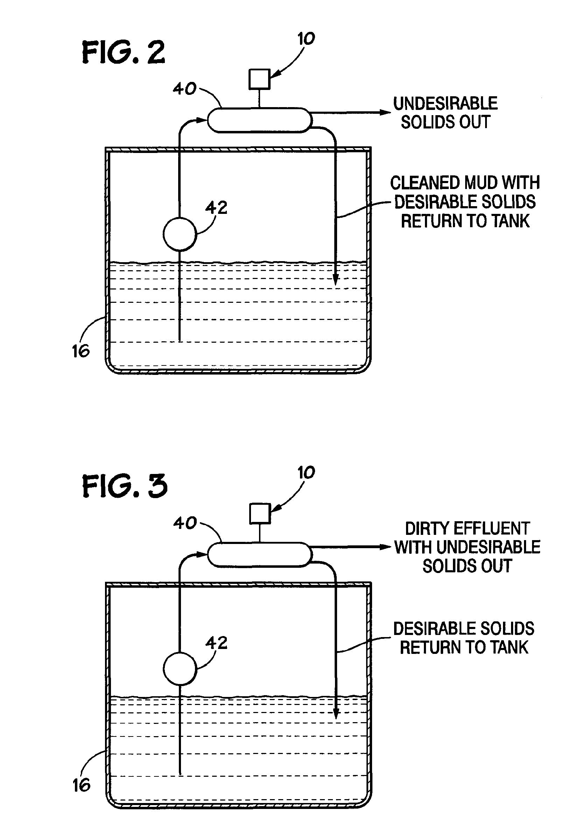

Fig. 2 illustrates schematically a first embodiment of a method according to the present invention using the control system 10 for the removal of undesirable solids and the return of cleaned mud with desirable solids to a mud tank 16. In certain aspects, a system according to the disclosure as in Fig. 2 is useful for controlling the density of drilling material in the mud tank 16.

In Fig. 2, solids returned to the tank 16 from the centrifuge 40 are desirable solids for use in the drilling fluid. In one aspect the centrifuge of Fig. 2 is a "high speed" centrifuge operating at greater than 2200 RPMs. In certain particular aspects when used to control density the centrifuge 40 is run at a G-force of 700 G's or greater.

In one particular aspect the system of Fig. 2 is used to control the density of drilling material. The mud tank 16 receives input drilling material from a wellbore mud system (drilling fluid with entrained cuttings, solids, and/or debris pumped up from a wellbore). Typically some desirable solids, e.g. barite solids, have a relative density of about 4.2 and some drilled solids have a relative density of about 2.3. Density of the drilling mud in the tank 16 is controlled by removing some, all or substantially all of the solids in a portion of the mud that is passed through the centrifuge 40, and by returning some or all of the mud back to the tank 16. Viscosity of the material in the tank 16 may be controlled by passing a portion of the mud through the centrifuge 40 and removing small barite solids (less than about ten microns in a largest dimension) and/or small drilled solids (less than about twenty microns in a smallest dimension). Solids from the centrifuge 40 are removed in the "Undesirable Solids - Out" line in Fig. 2, and substantially clean mud is returned back into the tank 16 (comprising no solids or only minimal solids).

In one aspect, in the system of Fig. 2 large solids e.g. barite solids are returned to the tank 16 (e.g. solids with a largest dimension greater than 10 microns). In other aspects, such solids with a greatest largest dimension less than 20 microns are removed. In one aspect, such solids of a desired size, e.g. of or lesser than a selected largest dimension, are removed, e.g. a desired largest dimension between 1 and 20 microns.

Fig. 3 illustrates schematically a method according to the present invention using the control system 10 in which desirable solids, e.g. barite solids, are recovered and reintroduced into the mud in the mud tank 16. The centrifuge 40 removes undesirable solids (e.g. fine solids with a largest dimension less than about 5 microns) and returns desirable solids (e.g. solids with a largest dimension greater than about 5 microns and/or of a specific material, e.g. barite) back to the mud tank 16 for re-use. In one aspect the centrifuge of Fig. 3 is a "low speed" centrifuge operating at less than about 2200 RPMs. In this way the aforementioned desirable solids are separated from the fluid by the centrifuge 40, whilst the undesirable solids remain suspended in the drilling fluid. In one particular aspect in which the system of Fig. 3 is used for viscosity control, the centrifuge is operated at a G-force of less than 1000 G's and, in one particular aspect, less than 700 G's.

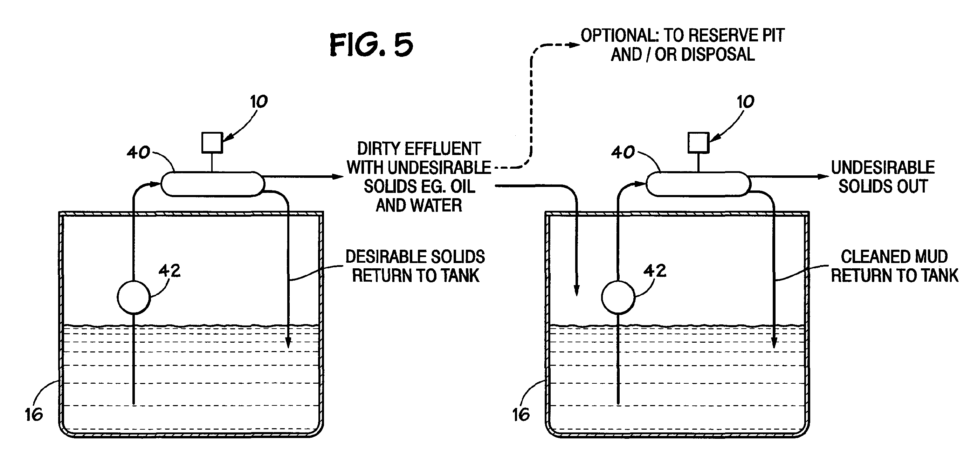

In another aspect the system of Fig. 3 is used to control viscosity of drilling material by removing viscosity-increasing solids, e.g. fine solids such as barite solids with a largest dimension less than or equal to about ten microns and/or drilled solids with a largest dimension less than or equal to about twenty microns. These removed solids remain in suspension in the drilling fluid and flow out in the line labelled "Dirty Effluent With Undesirable Solids - Out". There may be some effluent, e.g. oil, with these solids. These solids and/or effluent may be pumped to a reserve pit, to disposal, or, as shown in Fig. 5, to a system as shown in Fig. 2 for further processing in accord with any embodiment of the Fig. 2 system. In this way the undesirable solids are removed using a higher speed centrifuge so that the drilling fluid can be returned to the mud tank or other part of the mud system as desired. Optionally, in a viscosity-control system, recovered barite and/or recovered drilling solids (those not removed) are reintroduced back into the tank 16. Thus a desired viscosity of the drilling material is maintained by removing from the tank 16 at least some of the solids that increase viscosity.

In certain aspects, a system as in Fig. 2 is useful in building, reducing or maintaining a desired weight or desired density of mud.

The centrifuge 40 can be turned on and off automatically in response to inputs from the density sensors 18, 19 and/or viscosity sensor 30 in order to achieve desired drilling mud properties e.g. by building weight, or to lower weight, or to hit or maintain a desired target density or density range.

The centrifuge 40 may be part of the solids control system already existing on site, or it may be dedicated to the functions described herein.

The disclosure, therefore, provides in at least some embodiments, a system for controlling viscosity of drilling fluid, the system including a container of drilling fluid material, the drilling fluid containing solids, a viscosity sensor for sensing viscosity of the drilling fluid material in the container and for producing viscosity signals indicative of said viscosity, a centrifuge for removing solids from the drilling fluid material, the centrifuge having a rotatable bowl and a rotatable screw conveyor, pump apparatus for pumping drilling fluid material from the container to the centrifuge, bowl drive apparatus for driving the rotatable bowl, conveyor drive apparatus for driving the rotatable conveyor, pump drive apparatus for driving the pump apparatus, and a control system for receiving viscosity signals from the viscosity sensor and for controlling the centrifuge and the pump apparatus in response to said viscosity signals so that selected solids from drilling fluid material processed by the centrifuge are removed or are reintroducible back into the container to control viscosity of drilling fluid material in the container. Such a system may have one or some, in any possible combination, of the following: wherein the control system and the pump apparatus are operable continuously; wherein each drive apparatus is a variable frequency drive; wherein the pump apparatus is operable at a selected pumping rate; density sensor apparatus for measuring density of the drilling fluid material and for producing density signals indicative of measured density, the control system including computer apparatus for receiving signals indicative of the density measured by the density sensor apparatus and for calculating a desired viscosity value based on said measured density, the computer apparatus for comparing the desired viscosity value to viscosity value as sensed by the viscosity sensor, and the computer apparatus for controlling the drive apparatuses to maintain sensed viscosity value at or near the desired viscosity value; the control system including computer apparatus, and display apparatus for displaying results of operation of the computer apparatus; wherein the centrifuge is a low speed centrifuge; wherein the centrifuge is operable to separate barite solids from the drilling fluid material and said barite solids are returnable to the container; and/or wherein the centrifuge is a high speed centrifuge.

The present disclosure, therefore, provides in certain, but not necessarily all embodiments, a system for controlling viscosity of drilling fluid, the system including a container of drilling fluid material, the drilling fluid containing solids, a viscosity sensor for sensing viscosity of the drilling fluid material in the container and for producing viscosity signals indicative of said viscosity, a centrifuge for removing solids from the drilling fluid material, the centrifuge having a rotatable bowl and a rotatable screw conveyor, pump apparatus for pumping drilling fluid material from the container to the centrifuge, bowl drive apparatus for driving the rotatable bowl, conveyor drive apparatus for driving the rotatable conveyor, pump drive apparatus for driving the pump apparatus, and a control system for receiving viscosity signals from the viscosity sensor and for controlling the centrifuge and the pump apparatus in response to said viscosity signals so that selected solids from drilling fluid material processed by the centrifuge are reintroducible back into the container to control viscosity of drilling fluid material in the container, wherein the control system and the pump apparatus are operable continuously, wherein the each drive apparatus is a variable frequency drive, wherein the pump apparatus is operable at a selected pumping rate, the control system including computer apparatus, and display apparatus for displaying results of operation of the computer apparatus.

The present disclosure, therefore, provides in certain, but not necessarily all embodiments, a system for controlling density of drilling fluid, the system including a container of drilling fluid material, the drilling fluid containing solids, a density sensor for sensing density of the drilling fluid material in the container and for producing density signals indicative of said density, a centrifuge for removing solids from the drilling fluid material, the centrifuge having a rotatable bowl and a rotatable screw conveyor, pump apparatus for pumping drilling fluid material from the container to the centrifuge, bowl drive apparatus for driving the rotatable bowl, conveyor drive apparatus for driving the rotatable conveyor, pump drive apparatus for driving the pump apparatus, and a control system for receiving density signals from the viscosity sensor and for controlling the centrifuge and the pump apparatus in response to said density signals so that selected solids from drilling fluid material processed by the centrifuge are reintroducible back into the container to control density of drilling fluid material in the container.

The present disclosure, therefore, provides in certain, but not necessarily all embodiments, a method for controlling viscosity of drilling fluid, the method including feeding drilling fluid material to a system for processing, the system as any disclosed herein for controlling viscosity, and controlling the centrifuge in response to viscosity signals to control the viscosity of the drilling fluid material in the container.

The present disclosure, therefore, provides in certain, but not necessarily all embodiments, a method for controlling density of drilling fluid, the method including feeding drilling fluid material to a system for processing, the system as any disclosed herein for controlling density, and controlling the centrifuge in response to density signals to control the density of the drilling fluid material in the container.

## Claims

1. A method for controlling viscosity of drilling fluid containing solids, said drilling fluid circulating in a drilling fluid system, which method comprises the steps of:
(a) feeding drilling fluid into a container (16);
(b) sensing with a viscosity sensor (30) a viscosity of drilling fluid in said container (16) and providing a viscosity signal representative thereof;
(c) pumping a portion of said drilling fluid to a centrifuge (40);
(d) separating with said centrifuge (40) at least some of the solids from said portion of drilling fluid; and
(e) returning to said drilling fluid system drilling fluid and/or solids separated in step (d) to adjust the viscosity of said drilling fluid in said container (16);
and the further steps of:
(1) sensing a density of said drilling fluid and providing a density signal representative thereof;
(2) receiving said density signal with a computer apparatus (70) and using said computer apparatus to determine a desired viscosity value based on said density signal;
(3) comparing said desired viscosity value to the viscosity of drilling fluid represented by said viscosity signal, and in response to the comparison performing step (d); and
(4) substantially continuously controlling said viscosity of said drilling fluid in said container (16) by adjusting a separation efficiency of said centrifuge (40) according to the comparison between said viscosity signal and said desired viscosity value, so as maintain said viscosity signal at or near said desired viscosity value.

2. A method according to claim 1, further comprising the step of processing said drilling fluid with solids separation equipment prior to performing steps (a) to (e).

3. A method according to claim 1 or 2, wherein said centrifuge (40) is adjusted so that solids intended to control viscosity of drilling fluid are separated from said portion of drilling fluid, whilst solids not intended to control said viscosity remain in suspension in said portion of drilling fluid, the method further comprising the step of returning at least some of said solids separated from said drilling fluid to said container (16).

4. A method according to claim 3, wherein said solids comprise drilled solids, the method further comprising the step of separating said drilled solids from said portion of drilling fluid with said centrifuge (40) such that each separated drilled solid has a largest dimension of about twenty microns or more and each drilled solid remaining in suspension in said portion of drilling fluid has a largest dimension of about twenty microns or less.

5. A method according to any of claims 1, 2, 3 or 4, further comprising the step of separating barite solids suspended in said portion of drilling fluid with said centrifuge (40).

6. A method according to claim 5, wherein each of said barite solids has a largest dimension of about ten microns or greater.

7. A method according to any of claims 1 to 6, further comprising the step of operating said centrifuge (40) at a G-force of about 700 G's or less.

8. A method according to claim 1 or 2, further comprising the steps of separating substantially all solids suspended in said portion of drilling fluid, and returning at least some of said drilling fluid to said container (16).

9. A method according to claim 8, wherein the step of separating substantially all solids suspended in said portion of drilling fluid is performed after the steps of any of claims 3 to 7.

10. A method according to any preceding claim, further comprising the steps of controlling a pumping rate at which drilling fluid is pumped to said centrifuge (40) in step (b) in order to adjust said viscosity of said drilling material in said container (16).

11. An apparatus (10) for controlling viscosity of drilling fluid held in a container (16) that forms part of a drilling fluid circulation system, which apparatus comprises:
a viscosity sensor (30) for sensing viscosity of said drilling fluid in said container (16) and for outputting a viscosity signal indicative thereof;
a density sensor (18, 19) for sensing density of said drilling fluid in said container (16) and for outputting a density signal indicative thereof;
a centrifuge (40) for removing solids from the drilling fluid;
a pump apparatus (42) for pumping drilling fluid to said centrifuge (40); and
a control apparatus (70) for receiving said viscosity signal from said viscosity sensor (30) and said density signal from said density sensor (19), which control apparatus is configured to control said centrifuge (40) and said pump apparatus (42) to perform the method steps of any of claims 1 to 10.

12. An apparatus as claimed in claim 11, wherein said centrifuge (40) comprises a rotatable bowl (112), a rotatable screw conveyor (118), bowl drive apparatus for driving said rotatable bowl, and conveyor drive apparatus for driving the rotatable conveyor, the arrangement being such that, in use, said bowl drive apparatus and said conveyor drive apparatus are controllable by said control apparatus (70).

13. An apparatus as claimed in claim 13, wherein said bowl and/or conveyor drive apparatus comprises a variable frequency drive (60).

14. An apparatus as claimed in any of claims 11, 12 or 13, wherein said control apparatus (70) comprises a programmable logic controller (PLC), the apparatus further comprising display apparatus (80) for displaying results provided by said PLC.

15. A control apparatus for performing the method steps of any of claims 1 to 10 when used in an apparatus as claimed in any of claims 11 to 14.

16. A kit for controlling viscosity of drilling fluid held in a container that forms part of a drilling fluid circulation system, which kit comprises:
(a) a viscosity sensor (30);
(b) a density sensor (18, 19); and
(c) a control apparatus (70) comprising a memory storing computer executable instructions for performing the method steps of any of claims 1 to 10 when used in an apparatus as claimed in any of claims 11 to 14.

## Patentansprüche

1. Verfahren zum Steuern der Viskosität von Bohrfluid, das Feststoffe enthält, wobei das Bohrfluid in einem Bohrfluidsystem zirkuliert, wobei das Verfahren die folgenden Schritte umfasst:
(a) Zuführen von Bohrfluid in einen Behälter (16);
(b) Wahrnehmen von einer Viskosität von dem Bohrfluid in dem Behälter (16) und Bereitstellen von einem Viskositätssignal, welches dafür repräsentativ ist, mit einem Viskositätssensor (30);
(c) Pumpen von einem Teil des Bohrfluids zu einer Zentrifuge (40);
(d) Abtrennen von mindestens einigen der Feststoffe von dem Teil des Bohrfluids mit der Zentrifuge (40); und
(e) Zurückführen von Bohrfluid und/oder Feststoffen, die in dem Schritt (d) getrennt wurden, zu dem Bohrfluidsystem, um die Viskosität des Bohrfluids in dem Behälter (16) einzustellen;
und ferner die folgenden Schritte umfasst:
(1) Wahrnehmen von einer Dichte von dem Bohrfluid und Bereitstellen von einem Dichtesignal, welches dafür repräsentativ ist;
(2) Empfangen von dem Dichtesignal mit einem Computerapparat (70) und Verwenden von dem Computerapparat, um einen gewünschen Viskositätswert auf Basis von dem Dichtesignal zu bestimmen;
(3) Vergleichen von dem gewünschen Viskositätswert mit der Viskosität des Bohrfluids, welche durch das Viskositätssignal repräsentiert wird, und in Reaktion auf den Vergleich Durchführen von dem Schritt (d); und
(4) im Wesentlichen kontinuierliches Steuern von der Viskosität des Bohrfluids in dem Behälter (16), indem eine Trenneffizienz von der Zentrifuge (40) entsprechend dem Vergleich zwischen dem Viskositätssignal und dem gewünschten Viskositätswert eingestellt wird, um so das Viskositätssignal auf oder nahe dem gewünschen Viskositätswert zu halten.

2. Verfahren nach Anspruch 1, ferner umfassend den Schritt des Verarbeitens von dem Bohrfluid mit Feststofftrennausrüstung, und zwar vor dem Durchführen der Schritte (a) bis (e).

3. Verfahren nach Anspruch 1 oder 2, wobei die Zentrifuge (40) so eingestellt ist, dass Feststoffe, die dafür gedacht sind, um die Viskosität des Bohrfluids zu steuern, von dem Teil des Bohrfluids abgetrennt werden, während Feststoffe, die nicht dafür gedacht sind die Viskosität zu steuern, in Suspension in dem Teil des Bohrfluids zurückbleiben, wobei das Verfahren ferner den Schritt des Zurückführens von mindestens einigen der Feststoffe zu dem Behälter (16) umfasst, die von dem Bohrfluid abgetrennt wurden.

4. Verfahren nach Anspruch 3, wobei die Feststoffe Bohrkleinfeststoffe umfassen, wobei das Verfahren ferner den Schritt des Abtrennens der Bohrkleinfeststoffe von dem Teil des Bohrfluids mit der Zentrifuge (40) umfasst, so dass jeder abgetrennte Bohrkleinfeststoff eine größte Ausdehnung von etwa zwanzig Mikrometern oder mehr aufweiset und jeder Bohrkleinfeststoff, der in Suspension in dem Teil des Bohrfluids zurückbleibt, eine größte Ausdehnung von etwa zwanzig Mikrometern oder weniger aufweiset.

5. Verfahren nach einem der Ansprüche 1, 2, 3 oder 4, ferner umfassend den Schritt des Abtrennens von Baryt-Feststoffen mit der Zentrifuge (40), die in dem Teil des Bohrfluids suspendiert sind.

6. Verfahren nach Anspruch 5, wobei jeder von den Baryt-Feststoffen eine größte Ausdehnung von etwa zehn Mikrometern oder mehr aufweist.

7. Verfahren nach einem der Ansprüche 1 bis 6, ferner umfassend den Schritt des Betreibens von der Zentrifuge (40) bei einer G-Kraft von etwa 700 G oder weniger.

8. Verfahren nach Anspruch 1 oder 2, ferner umfassend die Schritte des Abtrennens von im Wesentlichen allen Feststoffen, die in dem Teil des Bohrfluids suspendiert sind, und des Zurückführens von zumindest etwas von dem Bohrfluid zu dem Behälter (16).

9. Verfahren nach Anspruch 8, wobei der Schritt des Abtrennens von im Wesentlichen allen Feststoffen, die in dem Teil des Bohrfluids suspendiert sind, nach den Schritten von einem der Ansprüche 3 bis 7 durchgeführt wird.

10. Verfahren nach einem der vorhergehenden Ansprüche, ferner umfassend die Schritte des Steuerns von einer Pumpmenge, mit der Bohrfluid zu der Zentrifuge (40) in dem Schritt (b) gepumpt wird, um die Viskosität des Bohrmaterials in dem Behälter (16) einzustellen.

11. Apparat (10) zum Steuern der Viskosität von Bohrfluid, das in einem Behälter (16), welcher einen Teil von einem Bohrfluidzirkulationssystem bildet, gehalten wird, wobei der Apparat das Folgende umfasst:
einen Viskositätssensor (30) zum Wahrnehmen der Viskosität von dem Bohrfluid in dem Behälter (16) und zum Ausgeben von einem Viskositätssignal, welches dafür bezeichnet ist;
einen Dichtesensor (18, 19) zum Wahrnehmen der Dichte von dem Bohrfluid in den Behälter (16) und zum Ausgeben von einem Dichtesignal, welches dafür bezeichnend ist;
eine Zentrifuge (40) zum Entfernen von Feststoffen aus dem Bohrfluid;
einen Pumpapparat (42) zum Pumpen von Bohrfluid zu der Zentrifuge (40); und
einen Steuerapparat (70) zum Empfangen von dem Viskositätssignal von dem Viskositätssensor (30) und dem Dichtesignal von dem Dichtesensor (19), wobei der Steuerapparat konfiguriert ist, die Zentrifuge (40) und den Pumpenapparat (42) zu steuern, um die Verfahrensschritte nach einem der Ansprüche 1 bis 10 durchzuführen.

12. Apparat nach Anspruch 11 wobei die Zentrifuge (40) eine drehbare Trommel (112), eine drehbare Schneckenfördervorrichtung (118), einen Trommelantriebsapparat zum Antreiben der drehbaren Trommel und einen Fördervorrichtungsantriebsapparat zum Antreiben der drehbaren Fördervorrichtung umfasst, wobei die Anordnung so ist, dass in Verwerdung der Trommelantriebsapparat und der Fördervorrichtungsantriebsapparat durch den Steuerapparat (70) steuerbar sind.

13. Apparat nach Anspruch 13, wobei die Trommel- und/oder der Förderantriebsapparat einen Antrieb mit variabler Frequenz (60) umfassen.

14. Apparat nach einem der Ansprüche 11, 12 oder 13, wobei der Steuerapparat (70) eine speicherprogrammierbare Steuerung (PLC für Englisch: programmable logic controller) umfasst, wobei der Apparat ferner einen Darstellungsapparat (80) umfasst, um die Ergebnisse, die von der PLC bereitgestellt werden, darzustellen.

15. Steuerapparat zum Durchführen der Verfahrensschritte nach einem der Ansprüche 1 bis 10, wenn dieser in einem Apparat nach einem der Ansprüche 11 bis 14 verwender wird.

16. Kit zum Steuern der Viskosität von Bohrfluid, das in einem Behälter, welcher einen Teil von einem Bohrfluidzirkulationssystem bildet, gehalten wird, wobei das Kit das Folgende umfasst:
(a) einen Viskositätssensor (30);
(b) einen Dichtesensor (18, 19); und
(c) einen Steuerapparat (70), der einen Computer mit Speicherfunktion umfasst, welcher in der Lage ist Instruktionen zum Durchführen der Verfahrensschritte nach einem der Ansprüche 1 bis 10 auszuführen, wenn dieser in einem Apparat nach einem der Ansprüche 11 bis 14 verwendet wird.

## Revendications

1. Procédé de régulation de viscosité d'un fluide de forage contenant des matières solides, ledit fluide de forage circulant dans un système de fluide de forage, lequel procédé comprend les étapes de :
(a) apport d'un fluide de forage dans un contenant (16) ;
(b) détection avec un capteur de viscosité (30) d'une viscosité de fluide de forage dans ledit contenant (16) et fourniture d'un signal de viscosité représentatif de celle-ci ;
(c) pompage d'une portion dudit fluide de forage vers une centrifugeuse (40) ;
(d) séparation avec ladite centrifugeuse (40) d'au moins une partie des matières solides de ladite portion de fluide de forage ; et
(e) renvoi audit système de fluide de forage d'un fluide de forage et/ou des matières solides séparées à l'étape (d) pour ajuster la viscosité dudit fluide de forage dans ledit contenant (16) ;
et les étapes supplémentaires de :
(1) détection d'une densité dudit fluide de forage et fourniture d'un signal de densité représentatif de celle-ci ;
(2) réception dudit signal de densité avec un appareil ordinateur (70) et utilisation dudit appareil ordinateur pour déterminer une valeur de viscosité souhaitée d'après ledit signal de densité ;
(3) comparaison de ladite valeur de viscosité souhaitée à la viscosité de fluide de forage représentée par ledit signal de viscosité, et en réponse à la comparaison, réalisation de l'étape (d) ; et
(4) régulation sensiblement continue de ladite viscosité dudit fluide de forage dans ledit contenant (16) en ajustant une efficacité de séparation de ladite centrifugeuse (40) selon la comparaison entre ledit signals de viscosité et ladite valeur de viscosité souhaitée, de façon à maintenir ledit signal de viscosité au niveau ou près de ladite valeur de viscosité souhaitée.

2. Procédé selon la revendication 1, comprenant en outre l'étape de traitement dudit fluide de forage avec un équipement de séparation de matières solides avant de réaliser les étapes (a) à (e).

3. Procédé selon la revendication 1 ou 2, dans lequel ladite centrifugeuse (40) est ajustée de sorte que des matières solides destinées à réguler la viscosité du fluide de forage soient séparées de ladite portion de fluide de forage, tandis que des matières solides non destinées à réguler ladite viscosité restent en suspension dans ladite portion de fluide de forage, le procédé comprenant en outre l'étape de renvoi d'au moins une partie desdites matières solides séparées dudit fluide de forage dans ledit contenant (16).

4. Procédé selon la revendication 3, dans lequel lesdites matières solides comprennent des matières solides forées, le procédé comprenant en outre l'étape de séparation desdites matières solides forées de ladite portion de fluide de forage avec ladite centrifugeuse (40) de sorte que chaque matière solide forée séparée ait une dimension la plus grande d'environ vingt microns ou plus et chaque matière solide forée restant en suspension dans ladite portion de fluide de forage ait une dimension la plus grande d'environ vingt microns ou moins.

5. Procédé selon l'une quelconque des revendications 1, 2, 3 ou 4, comprenant en outre l'étape de séparation de matières solides de barite en suspension de ladite portion de fluide de forage avec ladite centrifugeuse (40).

6. Procédé selon la revendication 5, dans lequel chacune desdites matières solides de barite a une dimension la plus grande d'environ dix microns ou plus.

7. Procédé selon l'une quelconque des revendications 1 à 6, comprenant en outre l'étape d'exploitation de ladite centrifugeuse (40) à une force G d'environ 700 G ou moins.

8. Procédé selon la revendication 1 ou 2, comprenant en outre les étapes de séparation de sensiblement la totalité des matières solides en suspension dans ladite portion de fluide de forage, et de renvoi d'au moins une partie dudit fluide de forage dans ledit contenant (16).

9. Procédé selon la revendication 8, dans lequel l'étape de séparation de sensiblement la totalité des matières solides en suspension dans ladite portion de fluide de forage est réalisée après les étapes de l'une quelconque des revendications 3 à 7.

10. Procédé selon l'une quelconque des revendications précédentes, comprenant en outre les étapes de régulation d'un débit de pompage auquel le fluide de forage est pompé dans ladite centrifugeuse (40) à l'étape (b) afin d'ajuster ladite viscosité dudit matériau de forage dans ledit contenant (16).

11. Appareil (10) de régulation de viscosité de fluide de forage contenu dans un contenant (16) qui fait partie d'un système de circulation de fluide de forage, lequel appareil comprend :
un capteur de viscosité (30) pour détecter la viscosité dudit fluide de forage dans ledit contenant (16) et pour fournir en sortie un signal de viscosité indicatif de celle-ci ;
un capteur de densité (18, 19) pour détecter la densité dudit fluide de forage dans ledit contenant (16) et pour fournir en sortie un signal de densité indicatif de celle-ci ;
une centrifugeuse (40) pour éliminer des matières solides du fluide de forage ;
un appareil de pompe (42) pour pomper un fluide de forage dans ladite centrifugeuse (40) ; et
un appareil de commande (70) pour recevoir ledit signal de viscosité en provenance dudit capteur de viscosité (30) et ledit signal de densité en provenance dudit capteur de densité (19), lequel appareil de commande est configuré pour commander ladite centrifugeuse (40) et ledit appareil de pompe (42) pour réaliser les étapes de procédé de l'une quelconque des revendications 1 à 10.

12. Appareil selon la revendication 11, dans lequel ladite centrifugeuse (40) comprend un bol rotatif (112), un convoyeur à vis rotatif (118), un appareil d'entraînement de bol pour entraîner ledit bol rotatif, et un appareil d'entraînement de convoyeur pour entraîner le convoyeur rotatif, l'agencement étant tel que, en utilisation, ledit appareil d'entraînement de bol et ledit appareil d'entraînement de convoyeur peuvent être commandés par ledit appareil de commande (70).

13. Appareil selon la revendication 13, dans lequel ledit appareil d'entraînement de bol et/ou de convoyeur comprend un entraînement à fréquence variable (60).

14. Appareil selon l'une quelconque des revendications 11, 12 ou 13, dans lequel ledit appareil de commande (70) comprend un contrôleur programmable (PLC), l'appareil comprenant en outre un appareil d'affichage (80) pour afficher des résultats fournis par ledit PLC.

15. Appareil de commande pour réaliser les étapes de procédé de l'une quelconque des revendications 1 à 10 lors d'une utilisation dans un appareil tel que revendiqué à l'une quelconque des revendications 11 à 14.

16. Kit de régulation de viscosité d'un fluide de forage contenu dans un contenant qui fait partie d'un système de circulation de fluide de forage, lequel kit comprend :
(a) un capteur de viscosité (30) ;
(b) un capteur de densité (18, 19) ; et
(c) un appareil de commande (70) comprenant une mémoire stockant des instructions exécutables par ordinateur pour réaliser les étapes de procédé de l'une quelconque des revendications 1 à 10 lors d'une utilisation dans un appareil tel que revendiqué à l'une quelconque des revendications 11 à 14.
